# EUROPÄISCHE PATENTSCHRIFT

(11) **EP 3 171 722 B1**
(45) Veröffentlichungstag und Bekanntmachung des Hinweises auf die Patenterteilung: **02.01.2019**
(21) Anmeldenummer: 15745174.1
(22) Anmeldetag: 24.07.2015
(51) Int. Cl.: A41D 13/015, A41D 13/05, B29L 31/48, B29L 31/00, A41D 31/00, A41D 13/02, B29C 39/10, B29C 39/36, B29K 509/04

(54) **TEXTILES BEKLEIDUNGSSTÜCK MIT WENIGSTENS EINER MIT PROTEKTORELEMENTEN BELEGTEN SCHÜRFSCHUTZZONE UND VERFAHREN ZU DESSEN HERSTELLUNG**
TEXTILE PIECE OF CLOTHING WITH AT LEAST ONE ABRASION-PREVENTION ZONE PROVIDED WITH PROTECTOR ELEMENTS, AND METHOD FOR PRODUCING THE SAME
PIÈCE DE VÊTEMENT TEXTILE AVEC AU MOINS UNE ZONE DE PROTECTION CONTRE LES ÉCORCHURES DOTÉE D'ÉLÉMENTS PROTECTEURS ET PROCÉDÉ DE FABRICATION DE LADITE PIÈCE DE VÊTEMENT TEXTILE

(30) Priorität: 25.07.2014 DE 102014010868; 25.07.2014 DE 202014005975 U
(43) Veröffentlichungstag der Anmeldung: 31.05.2017
(73) Patentinhaber: X-Technology Swiss GmbH, 8832 Wollerau (CH)
(72) Erfinder: LAMBERTZ, Bodo, CH-8853 Wilen bei Wollerau (CH)
(74) Vertreter: Schneider Feldmann AG Patent- und Markenanwälte
(86) Internationale Anmeldenummer: PCT/EP2015/067072
(87) Internationale Veröffentlichungsnummer: WO 2016/012619

(56) Entgegenhaltungen:
- DE-A1-102011 054 490
- US-A- 4 810 559

## Beschreibung

Die Erfindung betrifft ein textiles Bekleidungsstück mit wenigstens einer mit Protektorelementen belegten Schürfschutzzone mit den Merkmalen des Oberbegriffs des Anspruchs 1.

Außerdem betrifft die Erfindung ein Verfahren zur Herstellung eines solchen textilen Bekleidungsstücks mit den Merkmalen des Oberbegriffs des Anspruchs 7.

Im Bereich der Motorradbekleidung setzen sich zunehmend Schutzbekleidungen durch, die integrierte Protektoren aufweisen, zum Beispiel gemäß DE 100 14 025 A1. Diese Protektoren dienen jedoch insbesondere der Abstützung der Wirbelsäule bei einem Sturz zur Vermeidung von Wirbelsäulenfrakturen. Zum Schutz vor Schürfverletzungen sind sie nur bedingt geeignet, da die bei einem Sturz exponierten Körperteile nicht mit massiven Protektorelementen abgedeckt werden können, ohne die Beweglichkeit des Fahrers einzuschränken.

Stürzt ein Motorradfahrer, Radfahrer oder Rollerskater, so geht das Verletzungsrisiko zunächst weniger von dem unmittelbaren Aufprall auf die Fahrbahn aus. Ein Zweiradfahrer oder Skater hat eine relativ hohe Geschwindigkeit relativ zur Fahrbahn und damit eine hohe kinetische Energie, so dass er bei einem Sturz in einem spitzen Winkel auf die Fahrbahn trifft und dann über eine größere Strecke über die Fahrbahnoberfläche rutscht, bevor er durch die Reibungskräfte gebremst worden ist. Neben den unmittelbaren mechanischen Einwirkungen, die zu schweren Schürfverletzungen führen, muss auch die Wärmentwicklung in dieser Phase berücksichtigt werden. Bei einer Fahrtgeschwindigkeit von 60 km/h besitzt ein 80 kg schwerer Fahrer eine kinetische Energie von etwa 11 kJ. Bei einer Rutschzeit nach einem Sturz auf Asphalt oder Beton von etwa 3-4 Sekunden werden somit bis zum Stillstand etwa 3000 W pro Sekunde vor allem in Form von Wärme umgesetzt.

Dennoch ist das kontrollierte Ausgleiten der gestürzten Person über die Fahrbahnoberfläche die sicherste Möglichkeit, noch schwerere Verletzungen zu vermeiden, sofern die exponierten Körperstellen ausreichend mit Schürfschutzelementen geschützt ist. Wird der Gleitvorgang jedoch blockiert oder ist der Reibwert zwischen Fahrbahn und Bekleidung der Person zu hoch, kann es auch zu Überschlägen kommen, die schwere Verletzungen nach sich ziehen, gerade wenn z.B. ein Radfahrer sich noch nicht von seinem Fahrrad gelöst hat. Ist der Reibwert hingegen zu niedrig, ist der Rutschweg nach dem Sturz zu lang und es besteht die Gefahr, dass die gestürzte Person z.B. über den Fahrbahnrand hinaus in die Leitplanken am Fahrbahnrand rutscht. Ein Bekleidungsstück mit Protektorelementen ist in der DE 20 2011 051 635 U1 beschrieben. Es sieht vor, statt größerer flächiger Protektorelemente, welche gefährdete Körperpartien großflächig überdecken, eine Vielzahl kleiner Protektorelemente, die sich ergänzen, mit kleinem Abstand zueinander anzuordnen insbesondere um auch dreidimensionale Formen am Körper abzudecken. Allerdings ist dabei vorgesehen, nicht nur Schutz gegen Schürfverletzungen zu bieten, sondern auch gegen Schnittverletzungen und Einwirkung von Feuer. Daher ist die textile Fläche in der Schutzzone überwiegend von Protektorelementen überdeckt und nur ein sehr schmaler Zwischenraum bleibt frei. Im Hinblick auf motorisierte Zweiradfahrer kann möglicherweise aufgrund des ständigen Fahrtwinds eine ausreichende Abfuhr von Wärme und Schweiß in den restlichen unbedeckten Zonen erfolgen. Für die Temperatur- und Feuchtigkeitsregulierung beim Laufen, Fahrradfahren oder Roller-Skaten sind die verbleibenden, nicht-überdeckten Flächenanteile zu gering. Auch ist das Gewicht der Schutzbeschichtung zu hoch, wenn alle bei diesen Sportarten gefährdeten Zonen damit geschützt werden sollen. Schließlich besteht ein Problem darin, dass die Protektorelemente an der Außenseite relativ scharfkantig sind. Dadurch bleiben zwar die Spalte dazwischen klein, um einen effektiven Schutz gegen Schnitt- und Brandverletzungen zu bieten. Allerdings blockieren diese Kanten an Rauigkeiten des Untergrundes und erhöhen somit das Verletzungsrisiko mitunter sogar.

Die WO 2013/053587 beschreibt Textilien mit Schutzfunktion, bei denen Mischungen aus aushärtbaren Polymeren und darin eingelagerten abriebfesten Partikeln punktuell auf ein Gewebe aufgebracht werden. Die so ausgebildeten buckelförmigen Protektorelemente sind verteilt angebracht, so dass dazwischen Flächenbereiche unbedeckt bleiben und die Atmungsaktivität des Gewebes nur wenig eingeschränkt wird. Das Polymer soll nach dem Auftragen in obere Gewebeschichten eindringen, so dass mit dem Aushärten eine Verankerung erreicht werden soll. Die Schutzwirkung gerade vor Kontakthitze im Falle einer Rutschphase nach einem Sturz wird jedoch eingeschränkt, weil das Gewebe ohnehin dünn ist und durch die bis in tiefere Gewebeschichten reichenden Protektorelemente nur noch sehr dünne Restschichten für die Wärmeisolierung wirksam sein können.

Bilden sich beim Tragen Falten im Gewebe, so können sich diese bei einem Sturz zwischen die Fahrbahnoberfläche und darunter liegende Protektorelemente legen. Damit besteht die Gefahr, dass die Schutzkleidung aufreißt, so dass die Haut ungeschützt frei liegt. Aufgrund der geringen Dehnbarkeit des Gewebes und geringen Verankerungstiefe darin können die Protektorelemente auch vom Gewebe abreißen. Weiterhin hat sich als schwierig erwiesen, mittels einfach gelochter Schablonen aus einer pastösen polymeren Mischung eine Vielzahl gleichmäßig angeordneter und gleichmäßig geformter Protektorelemente zu bilden.

Ein Bekleidungsstück der eingangs genannten Art ist zudem in der US 4 810 559 beschrieben. Dort sind kleine Protektorelemente vorgesehen, die einseitig oder beidseitig am Gewebe verankert sind. Durch die flache Form kann aber nicht immer sicher gestellt sein, dass ein kleiner Gleitwinkel erreicht wird, wenn die gestürzte Person über die Fahrbahn rutscht.

Eine erste Aufgabe der vorliegenden Erfindung besteht somit darin, ein textiles Bekleidungsstück mit wenigstens einer mit Protektorelementen belegten Schürfschutzzone der eingangs genannten Art so zu verbessern, dass nicht nur ein effektiver Abschürfschutz der Haut über den gesamten Rutschweg bis zum vollständigen Auslauf gegeben ist, sondern dass auch ein bestimmter Reibwert in der Paarung zwischen der Oberfläche in der Schürfschutzzone des Bekleidungsstücks und einer Asphalt- oder Betonoberfläche einer Straße besteht, der ein definiertes Ausgleiten der Person über die Fahrbahn erlaubt und Folgeüberschläge vermeidet.

Diese Aufgabe wird erfindungsgemäß durch ein Bekleidungsstück mit wenigstens einer mit Protektorelementen belegten Schürfschutzzone mit den Merkmalen des Schutzanspruchs 1 gelöst.

Erfindungswesentlich ist das Zusammenspiel aus der textilen Elastizität und der Härte, Form und Anordnung der Protektorelemente.

Eine im Zusammenhang mit der vorliegenden Erfindung als "Gleitwinkel" bezeichnete Größe stellt ein Maß dafür dar, wie ein Kraftvektor auf ein einzelnes Protektorelement wirkt, wenn dieses an einer Fahrbahnunebenheit oder einem Fremdkörper anschlägt. Definiert wird der "Gleitwinkel" vorliegend als der Winkel zwischen der textilen Außenseite, welche die Protektorelemente trägt und einer Tangente, die aus der Mitte zwischen benachbarten Protektorelementen an der textilen Basis ausgeht und jeweils tangential an dem vorzugsweise kugelabschnittsförmig geformten Protektorelement anliegt.

Der Gleitwinkel ist auch ein Maß dafür, um welchen Winkel die Protektorelemente auf einer ebenen Fahrbahn gegenüber der Fahrbahnoberfläche gekippt angestellt werden können, bis der zwischen den Protektorelementen frei liegende textile Bereich die Oberfläche der textilen Basis berührt.

Der ursprüngliche Gleitwinkel am Bekleidungsstück reduziert sich beim Tragen auf dem Körper noch infolge der Dehnung des textilen Flächengebildes, auf das die Protektorelemente aufgebracht sind. Die Auswahl eines Gestricks ist besonders vorteilhaft, da zum weiteren Schutz des Sportlers hoch reißfeste Fasern eingesetzt werden können, die aber aufgrund ihrer besonderen Verarbeitung dennoch eine deutliche Dehnung des textilen Flächengebildes erlauben. Die Dehnung wird also zunächst durch die Verlängerung der Fadenschlingen erreicht und nicht primär durch eine Materialelastizität der Fasern. Dies bedeutet auch, dass der Dehnungsbereich nach oben begrenzt wird, bis nämlich die maximale Auslängung des gestrickten Textils möglich ist, z. B. auf maximal 100%. Dadurch wird verhindert, dass die Protektorelemente zu weit auseinandergezogen werden und zu große frei liegende Flächenbereiche vorhanden sind.

Außerdem bietet der größere Faser- und Fadenabstand beim Gestrick eine bessere Möglichkeit der Verankerung der aufgebrachten Protektorelemente.

Das erfindungsgemäße Kleidungsstück besitzt in Bezug auf eine nominelle Kleidergröße ein Untermaß, so dass beim Anziehen bereits eine erste Vordehnung des textilen Grundkörpers von mindestens20 % erreicht wird. Damit liegt das Bekleidungsstück hauteng an und die kuppelförmigen Protektorelemente werden exakt entlang der Hautoberfläche ausgerüstet. Auch Falten werden vermieden, da etwaige Falten Ansatzpunkte bilden könnten, um beim Sturz am Untergrund festhängen zu bleiben und das schützende Bekleidungsstück aufzureißen.

Neben der Vordehnung ermöglicht das textile Flächengebilde unter hoher Belastung eine zusätzliche Dehnung von wenigstens weiteren 20 %.

Durch die hohe Vordehnung steigt der Abstand der Protektorelemente zueinander und der Gleitwinkel sinkt. Dehnt sich das Gewebe bei einem Sturz zusätzlich noch, so sinkt der Gleitwinkel noch weiter.

Stürzt der Träger des Bekleidungsstücks mit der im Rennsport üblichen hohen Geschwindigkeit, insbesondere von einem Zweirad, so fällt er nicht senkrecht auf die Straße, sondern er trifft aufgrund seiner Massenträgheit in einem spitzen Winkel auf die Fahrbahn auf. Gerade bei Bergabfahrten besteht eine hohe Geschwindigkeit und noch eine zusätzliche Geländeneigung, so dass relativ kleine Aufprallwinkel erreicht werden. Nach dem Aufprall des Körpers auf die Fahrbahnoberfläche ist es zur Vermeidung schwererer Verletzungen notwendig, mit einem definierten Reibwert zwischen der Außenseite des Bekleidungsstücks und der Fahrbahnoberfläche einen gebremsten Auslauf der gestürzten Person zu erreichen, der jedoch nicht zu abrupt sein darf, um Überschläge zu vermeiden.

Die mit dem erfindungsgemäßen Bekleidungsstück geschützte Person gleitet im Idealfall derart über die Fahrbahn, dass nur die Kuppen der vorzugsweise kugelabschnittsförmigen Protektorelemente auf der Fahrbahnoberfläche aufliegen.

Aufgrund der großen Härte der insbesondere aus Borcarbid gefertigten Protektorelemente ist der Abrieb so gering, dass im Auslaufbereich nach dem Sturz die Protektorelemente zwar in ihrer Höhe reduziert werden, jedoch nicht vollständig bis auf die textile Basis abgeschliffen werden können. Gleichzeitig besitzen die kugelabschnittsförmigen Protektorelemente eine relativ große Oberfläche im Verhältnis zu ihrem Volumen, so dass entstehende Reibungswärme bereits am Entstehungsort abgestrahlt werden kann. Eine Wärmeübertragung in das Gestrick hinein erfolgt aufgrund der geringen Wärmeleitfähigkeit des gestrickten textilen Untergrundes nur langsam.

Zudem kann das Gestrick im Vergleich zu einem Gewebe deutlich dicker ausgebildet werden, ohne dass die Luftdurchlässigkeit und die Thermoregulierung beeinträchtigt werden.

Anders als im Stand der Technik wird erfindungsgemäß die beschriebene Schutzwirkung aber auch dann erzielt, sofern es nicht zu einem quasi idealen Sturzverlauf auf einer ebenen Fahrbahnoberfläche kommt. Vielmehr muss in der Praxis damit gerechnet werden, dass Risse die Fahrbahn queren oder dass Fremdkörper wie Sand und Splitt auf der Fahrbahn liegen, die zwischen der gestürzten Person und der Fahrbahn eingeklemmt werden können.

Trifft ein Protektorelement bei dem erfindungsgemäßen Bekleidungsstück auf eine Verwerfung oder einen Riss in der Fahrbahn, so kann es aufgrund seiner flachen und kugelabschnittsförmigen Form in Verbindung mit dem geringen Gleitwinkel in vielen Fällen trotzdem problemlos über das Hindernis hinweggleiten. Sollten sich einzelne Protektorelemente dennoch am dem Hindernis verfangen, kommt hier die Dehnungsreserve in der textilen Basis ins Spiel, die aufgrund der Möglichkeit der elastischen Dehnung den weiteren Gleitvorgang der gestürzten Person zumindest nicht abrupt beendet. Selbst wenn eine ganze Linie von Protektorelementen in einen Fahrbahnriss hinein gerät, wird die Person nicht derartig abgebremst, dass unmittelbar eine Überschlagsbewegung stattfindet. Die hohe Reißfestigkeit der eingesetzten Fasern im Zusammenhang mit der Elastizität des textilen Untergrundes können dazu führen, dass die Person zunächst um ein Stück weiter rutscht, wobei lokale Teile des Textils gespannt werden. In vielen Fällen sind die Rückstellkräfte dann ausreichend, um die blockierten Protektorelemente zu lösen und ihrer Ausgangslage zurückzuführen. Kommt es im schlechtesten Fall doch zu einem Abriss einzelner Protektorelemente, so ist zumindest mit dem Abriss keine plötzliche Bremsbewegung verbunden, die zu den genannten Überschlagsfolgen führen könnte. Auch bei Verlust einzelner Protektorelemente kann die gestürzte Person weiter ausgleiten und wird dabei durch die Vielzahl der übrigen Protektorelemente noch ausreichend geschützt.

Vorteilhaft ist es hierzu, zwischen zwei Reihen von Protektorelementen mit einer größeren Höhe wenigstens eine Reihe von Elementen mit einer kleineren Höhe anzuordnen. Zunächst besteht dann der Kontakt mit der Fahrbahnoberfläche bei den großen Elementen. Sind Teile des Bekleidungsstücks lokal stark gekrümmt und/oder ist die Vorspannung bereits sehr groß, weil die Person eine zu kleine Kleidergröße ausgewählt hat, dann sind die zwischen den großen Elementen exponiert liegenden textilen Bereiche durch die wenigstens eine zusätzliche Reihe von kleineren Elementen zusätzlich geschützt. Reißt ein größeres Element ab, so bleibt das niedrigere, kleinere Element unbeschädigt und bietet einen Schutz für den Rest der Sturzphase.

Eine Variation der Größen kann auch dafür vorgesehen sein, Körperbereiche, die sehr stark exponiert sind und bei denen wenig Muskelgewebe vorhanden ist, stärker zu schützen und Schürfverletzungen bis in tiefere Hautschichten auf jeden Fall zu verhindern. Hierzu zählen der Bereich der Beckenknochen, der Schultergelenke, der Schulterblätter sowie der Ellenbogengelenke.

Als besonders vorteilhaft hat sich erwiesen, die Anordnung der Protektorelemente in einer ungerichteten, anisotropen Form vorzunehmen, also rasterförmige Anordnungen der Protektorelemente bewusst zu vermeiden oder zumindest lokale Sub-Muster nicht über die gesamte Schürfschutzzone zu wiederholen. Risskanten im Stoff werden dadurch vermieden.

Schließlich kann eine Anpassung bei der Anordnung der Protektorelemente anhand der Sportart erfolgen, für die das Bekleidungsstück vorgesehen ist. Bei einem Straßenrennradfahrer sind andere Körperpartien betroffen und es muss eine höhere kinetische Energie im Falle eines Sturzes durch Reibung abgebaut werden als bei einem Marathonläufer, der im Startfeld stürzt, oder bei einem Skirennfahrer, der auf vereistem oder harschigem Untergrund stürzt. Eine weitere Die Aufgabe der vorliegenden Erfindung besteht somit darin, die Fertigung eines textilen Bekleidungsstücks mit wenigstens einer mit Protektorelementen belegten Schürfschutzzone zu verbessern und zu erleichtern.

Diese Aufgabe wird erfindungsgemäß durch ein Verfahren zur Herstellung eines Bekleidungsstücks mit wenigstens einer mit Protektorelementen belegten Schürfschutzzone mit den Merkmalen des Anspruchs 7 gelöst.

Erfindungswesentlich ist zunächst die Verwendung einer dehnbaren und in Schlauchform vorliegenden textilen Trägerschicht.

Durch die Vordehnung ist die Fertigung erleichtert, da die Trägerschicht durch das eingeschobene Stützelement wie insbesondere eine Stützplatte stramm und fest an dem Stützelement anliegt und ein Verrutschen bei der weiteren Bearbeitung vermieden wird. Außerdem können die Protektorelemente. so angebracht werden, wie sie später im Gebrauch vorliegen sollen, denn erfindungsgemäß ist eine hohe Dehnbarkeit der textilen Trägerschicht von mindestens 20% vorgesehen. Das daraus gebildete Bekleidungsstück erfüllt seine Schutzfunktion nur, wenn es am Träger ebenso eng anliegt wie am Stützmittel während der Produktion. Entsprechend wird das Kleidungsstück mit einem je nach Konfektionsgröße kleineren oder größerem Untermaß gefertigt. An der vorgedehnten Trägerschicht kann also das gewünschte Muster von Protektorelementen mit den gewünschten Abständen zueinander erzeugt werden. Nach der Entnahme des Stützelements zieht sich die Trägerschicht auf das Ursprungsmaß zusammen, wobei sich die Abstände der Protektorelemente verringern.

Die Verwendung von Strickware hat am fertigen Bekleidungsstück den Vorteil, dass sich ein hohes Maß an Dehnung von bis zu 100% einstellen lässt. Das Bekleidungsstück liegt damit auf jeden Fall faltenfrei am Körper an. Die Strickware bietet zudem eine hohe Luftdurchlässigkeit und besitzt im Vergleich zu einem Gewebe eine wesentlich größere Schichtdicke. Damit wird die Wärmeisolation entscheidend verbessert und die Verankerung der Protektorelemente ist gegenüber einem Gewebe in tieferen Schichten möglich, ohne dass der Schutz vor der durch Reibung entstehenden Kontakthitze nachteilig gemindert wird. Die textile Trägerschicht ist in diesem Fall ein Rundstrickschlauch.

Die Verwendung eines Gestricks in Form eines Rundstrickschlauchs ist auch deshalb vorteilhaft, weil dadurch ungeschützte Nahtbereiche am fertigen Bekleidungsstück vermieden werden und Schürfschutzzonen am gesamten Umfang eines Körperbereichs ausgebildet werden können. Erfindungsgemäß wird dazu bevorzugt eine Stützplatte in den Rundstrickschlauch eingeschoben, so dass sich eine obere und eine untere frei liegende Oberfläche bilden, auf denen die Protektorelemente hergestellt werden können. Auch kann der Rundstrickschlauch abschnittsweise behandelt werden, indem die Stützplatte entfernt und der Rundstrickschlauch neu darin positioniert wird.

Zur Herstellung einer Vielzahl von Protektorelementen mit definierter kegel- oder kugelabschnittsförmiger Geometrie ist erfindungsgemäß vorgesehen, Formelemente mit einer Vielzahl konkaver Formkavitäten zu verwenden. Als Formelement eignen sich ebene Formplatten besonders. Es können aber auch Formwalzen verwendet werden.

In einer ersten Variante des erfindungsgemäßen Verfahrens wird bevorzugt eine Formplatte benutzt, die eine Vielzahl von konkaven Formkavitäten enthält, die jeweils eine breite Basis an der der textilen Trägerschicht zuzuwendenden Oberfläche besitzen und eine verjüngte Öffnung an der gegenüberliegenden Oberfläche. Die Formplatte wird mit der mit den breiten Öffnungen der Formkavitäten versehenen Oberfläche auf den mit der Stützplatte gestützten Rundstrickschlauch bzw. eine andere dehnbare textile Trägerschicht aufgelegt. Dann wird das pastöse Beschichtungsmaterial durch die schmalen Öffnungen der Formplatte hindurch nach unten in die Formkavitäten gepresst und die Formplatte wird an der mit den schmalen Öffnungen versehenen Oberfläche abgerakelt. Die Formkavitäten können so restlos gefüllt werden und zugleich kann die Beschichtungsmasse bis in das unter der Formplatte liegende Gestrick gepresst werden.

Nur an der kleinen oberen Öffnung der Formkavität besteht Luftkontakt der Beschichtungsmasse und nur dort können kleine Einfallstellen auftreten. Die Öffnung an der Oberseite der Formkavität wird sehr schmal gehalten, so dass - anders als bei einer einfach gelochten Schablone - durch das Abrakeln nur eine leichte Abweichung von einer idealen geometrischen Halbkugelform entsteht.

Eine andere bevorzugte Variante des erfindungsgemäßen Verfahrens sieht ebenfalls die Verwendung einer Formplatte als Formelement mit einer Vielzahl von konkaven Formkavitäten vor, jedoch besitzen die Kavitäten keine weitere Öffnung an der Oberseite. Die Formplatte wird vielmehr mit den Öffnungen nach oben weisend positioniert und dann befüllt. Würde man diese nur einseitig offenen Formkavitäten nun einfach nach Art einer Gebäckform mit der pastösen Beschichtungsmasse füllen und die Oberfläche abrakeln, würden sich Einfallstellen an der Basis der jeweiligen Kavitäten bilden. Nach dem Umstürzen der Formplatte und Auflegen auf den Schlauch würde eine oberflächliche Verbindung der pastösen Beschichtungsmasse mit dem Gestrick nur aufgrund der nach unten sackenden Beschichtungsmasse erfolgen können. Da kein Druck auf die Beschichtungsmasse ausgeübt werden könnte, müsste die Viskosität der Beschichtungsmasse gesenkt werden, damit diese überhaupt in die textile Schicht eindringen kann. Dadurch wäre aber wiederum die Formstabilität der noch nicht ausgehärten Portionen beeinträchtigt, so dass die Form der ausgehärteten Protektorelemente nicht gleichmäßig wäre und nicht der gewünschten Geometrie entsprechen würde. Durch das Abrakeln würde die Beschichtungsmasse außerdem in randnahe Bereiche um die vorgesehenen Formkavitäten herum verschleppt.

Die Besonderheit des erfindungsgemäßen Verfahrens nach dieser Verfahrensvariante besteht nun darin, an jeder Formkavität gezielt ein Übermaß an Beschichtungsmasse bereitzustellen, so dass beim Auflegen der Formplatte auf den Rundstrickschlauch bzw. umgekehrt dieses Übermaß an Beschichtungsmasse in das Textil wie z. B. ein Gestrick hinein gedrückt wird und für eine sichere Verankerung der Protektorelemente darin sorgt. Dieses Übermaß wird in sehr definierter Form dadurch bereitgestellt, dass vor dem Einfüllen des Beschichtungsmaterials in die Formkavitäten eine dünne Rakelhilfeplatte auf die Formplatte aufgelegt wird, deren Dicke insbesondere weniger als ein Fünftel der Tiefe der Formkavitäten beträgt und die mit Ausnehmungen versehen ist. Das Lochbild der Rakelhilfeplatte stimmt mit den Öffnungsquerschnitten der Formkavitäten an der Oberfläche der Formplatte überein. Mit dieser Rakelhilfeplatte zusammen erfolgt die Befüllung der Formkavitäten. Überschüssige Beschichtungsmasse wird durch Abrakeln der Oberseite der aufgelegten Rakelhilfeplatte entfernt. Sodann wird die Rakelhilfeplatte vorsichtig, und zwar möglichst in genau senkrechter Richtung zur Formplatte, abgenommen. Das pastös eingestellte Beschichtungsmaterial steht nun um die Dicke der Rakelhilfeplatte erhöht über die Oberfläche der eigentlichen Formplatte über. Dieser Überstand bildet das genannte Übermaß an Beschichtungsmasse.

Ein weiterer vorteilhafter Effekt ergibt sich durch das Abziehen der Rakelhilfeplatte, denn aufgrund einer Anhaftung der Beschichtungsmasse an den schmalen Kanten der Öffnungen in der Rakelhilfeplatte ergibt es sich, dass beim Hochziehen der Platte vor allem die Ränder des Überstands an Beschichtungsmasse mit hochgezogen werden und sich im Zentrum eine Trichterform bildet. Es bilden sich also an der entsprechend steif und verlaufsfrei eingestellten Beschichtungsmasse fast scharfkantige Ränder, so dass auch nach dem Aufdrücken auf das textile Trägermaterial und nach dem Aushärten die auf diese Weise hergestellten Protektorelemente sehr definierte, randscharfe Konturen an der Basis aufweisen. Auch die übrige sphärische Form der Protektorelemente entspricht vollständig der durch die Formkavität vorgegebenen Form, denn bei der Verbindung des Rundstrickschlauchs mit der Formplatte wird der Überstand ins Gewebe gedrückt, wodurch zugleich auch ein Druck auf die Beschichtungsmasse bewirkt wird, der dazu führt, dass sich die Masse vollflächig an die Begrenzungen der Kavitäten anlegt.

Die Beschichtungsmasse wird dann ausgehärtet. Dies kann je nach der chemischen Beschaffenheit der der Beschichtungsmasse durch eine Wärmebehandlung erfolgen, aber z.B. auch durch Bestrahlung mit UV-Licht, chemische Aushärtung durch Verwendung eines Zwei-Komponenten-Gemisches usw. vorgenommen werden.

Vorzugsweise erfolgt die Aushärtung, indem der Verbund aus dem Formelement und der textilen Trägerschicht wie insbesondere dem Rundstrickschlauch in einen Härteofen eingelegt wird. Danach wird die Formplatte von der textilen Trägerschicht abgenommen. Das mit den Protektorelementen versehene Textil kann nun in bekannter Weise zu einem Bekleidungsstück weiter verarbeitet werden.

Um das Lösen der Protektorelemente aus den Kavitäten zu erleichtern, werden die Formkavitäten vorzugsweise schon bei der Vorbereitung der Formplatte mit einem Trennmittel behandelt.

Die zweite bevorzugte Ausführungsform des erfindungsgemäßen Verfahrens, die den Einsatz der Rakelhilfeplatte vorsieht, ermöglicht es, das pastöse Beschichtungsmaterial mit einer hohen Viskosität einzustellen, da es nicht durch eine schmale Öffnung hindurch gedrückt werden muss, sondern von der breiten Öffnungsseite her in die Kavitäten eingedrückt werden kann. Dadurch ist die Masse auch bei kurzzeitigen Einflüssen der Gravitationskraft verlaufsfrei. Die Formplatten können also auch gestürzt und mit den Öffnungen nach unten weisend aufgelegt werden. Somit können an dem über die Stützplatte abgestützten Textil wie dem Rundstrickschlauch mittels zweier Formplatten zugleich die Ober- und die Unterseite behandelt werden.

Aufgrund der großen Härte der insbesondere aus Borcarbid und einem aushärtbaren polymeren Basiswerkstoff gefertigten Protektorelemente ist der Abrieb so gering, dass im Auslaufbereich nach einem Sturz die Protektorelemente zwar in ihrer Höhe reduziert werden, jedoch nicht vollständig bis auf die textile Basis abgeschliffen werden können. Gleichzeitig besitzen die kugelabschnittsförmigen Protektorelemente eine relativ große Oberfläche im Verhältnis zu ihrem Volumen, so dass entstehende Reibungswärme teilweise bereits am Entstehungsort abgestrahlt werden kann.

Eine Wärmeübertragung hinein erfolgt aufgrund der geringen Wärmeleitfähigkeit insbesondere bei einem gestrickten textilen Untergrundes nur langsam.

Die Erfindung wird nachfolgend mit Bezug auf die Zeichnung näher erläutert. Die Figuren zeigen im Einzelnen:
- Fig. 1: ein Bekleidungsstück mit Schürfschutzzonen in perspektivischer Ansicht;
- Fig. 2: die Vorbereitung einer textilen Trägerschicht in perspektivischer Ansicht;
- Fig. 3a: eine Formplatte gemäß einer ersten Ausführungsform in perspektivischer Ansicht von unten;
- Fig. 3b: die Formplatte nach Figur 3a im Schnitt;
- Fig. 3c: eine Rakelhilfeplatte in perspektivischer Ansicht;
- Fig. 4a -4f: die Fertigung von Protektorelementen in verschiedenen Stadien, jeweils im Schnitt;
- Fig. 5a, 5b: eine Formplatte gemäß einer zweiten Ausführungsform von unten und von oben;, jeweils in perspektivischer Ansicht;
- Fig. 5c: die Formplatte nach Figur 5a, 5b im Schnitt;
- Fig. 6a -6f: die Fertigung von Protektorelementen in verschiedenen Stadien, jeweils im Schnitt; und
- Fig. 7: eine Ausführungsform der Formplatte nach Fig. 3b.
- Fig. 8a, 8b: ein mit Protektorelementen versehenes Bekleidungsstück gemäß dem Stand der Technik, in seitlicher Schnittansicht
- Fig. 9a: einen ungedehnten Ausschnitt eines erfindungsgemäßen Bekleidungsstücks in perspektivischer Ansicht;
- Fig. 9b: einen gedehnten Ausschnitt des Bekleidungsstücks, in seitlicher Schnittansicht;
- Fig. 10a - 10d: das Wirkprinzip des erfindungsgemäßen Bekleidungsstücks in einer Abfolge beim Sturz, jeweils in schematischer seitlicher Ansicht.

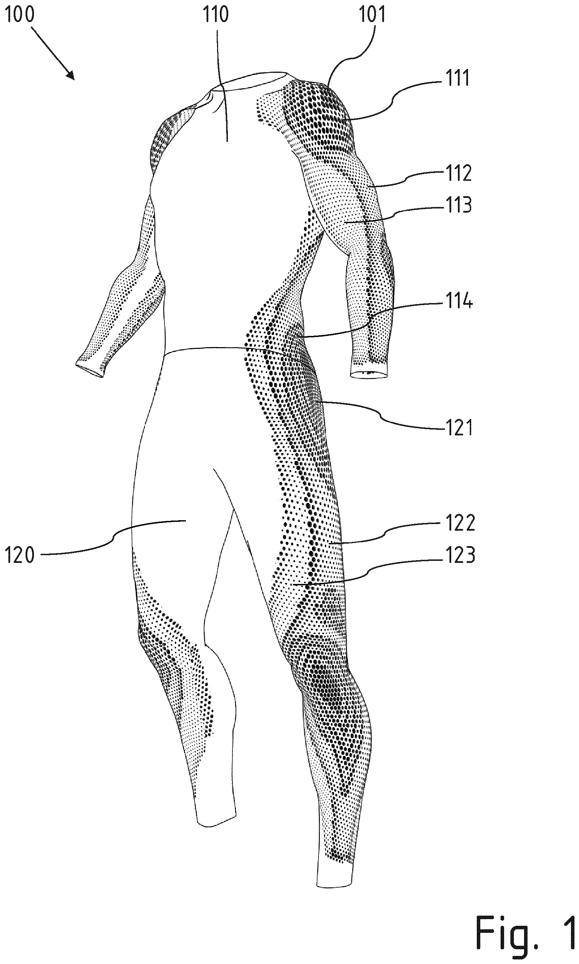

Fig. 1 zeigt einen zweiteiligen Anzug 100 für Straßenradrennen. Ein erstes Bekleidungsstück ist als Oberteil 110 ausgebildet. Die besonders gefährdeten Bereiche liegen hier an der Schulter sowie seitlich am Rumpf. Im Schulterbereich ist eine Schürfschutzzone 111 mit besonders großen Protektorelementen 101 ausgebildet. Entlang des Arms zieht sich eine zweite Schürfschutzzone 112 mit Protektorelementen mittlerer Größe. In einer dritten Schürfschutzzone 113 an der Armrück- und -innenseite, welche beim Radfahren weniger gefährdet sind, sind kleinere Protektorelemente angebracht. Auch im Rücken- und Hüftbereich sind Schürfschutzzonen 114 ausgebildet.

Ergänzt wird das Oberteil 110 durch eine Hose 120, an der ebenfalls Schürfschutzzonen 121, 122, 123 ausgebildet sind, und zwar insbesondere an den Beinaußenseiten bis in den Bereich des Gesäßes.

Somit erstreckt sich in der Kombination der beiden Bekleidungsstücke 110, 120 eine durchgängige Schürfschutzzone vom Bereich des Unterschenkels über das Knie und die Außenseite des Oberschenkels, das Becken und das Gesäß bis auf die Körperrückseite zur Schulter hin.

Die Körpervorderseite hingegen kann weitgehend frei von Schürfschutzzonen gehalten werden, da beim Radfahren ein genau nach vorn gerichteter Sturz eher unwahrscheinlich ist und bedingt durch die typische Körperhaltung beim Sturz eher ein seitliches Wegkippen auf die eine oder andere Körperseite erfolgen wird.

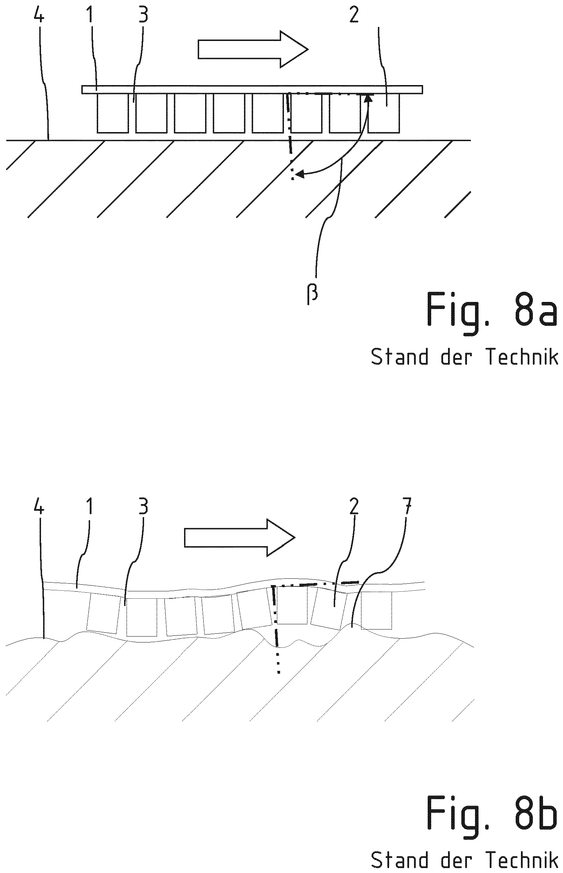

Fig. 8a zeigt in einer schematischen seitlichen Schnittansicht ein nach dem Stand der Technik ausgerüstetes Bekleidungsstück 1 mit Protektorelementen 2. Die Lücke 3 zwischen benachbarten Protektorelementen 2 ist klein, so dass der sogenannte Gleitwinkel β mit fast 90° sehr groß ist. Im Idealfall gleitet auch das derart geschützte Bekleidungsstück 1 über eine Fahrbahnoberfläche 4 und bietet einen Schutz vor Schürfverletzungen.

Im Realfall ist die Fahrbahnoberfläche jedoch rau und besitzt Verwerfungen oder Risse, welche in Fig. 8b angedeutet sind. Das aus dem Stand der Technik bekannte Bekleidungsstück 1 bleibt in diesem Fall mit den Kanten seiner Protektorelemente 2 an Rauhigkeitsspitzen hängen, so dass es zu einem Abriss der Protektorelemente 2 kommt oder zu einem abrupten Stopp.

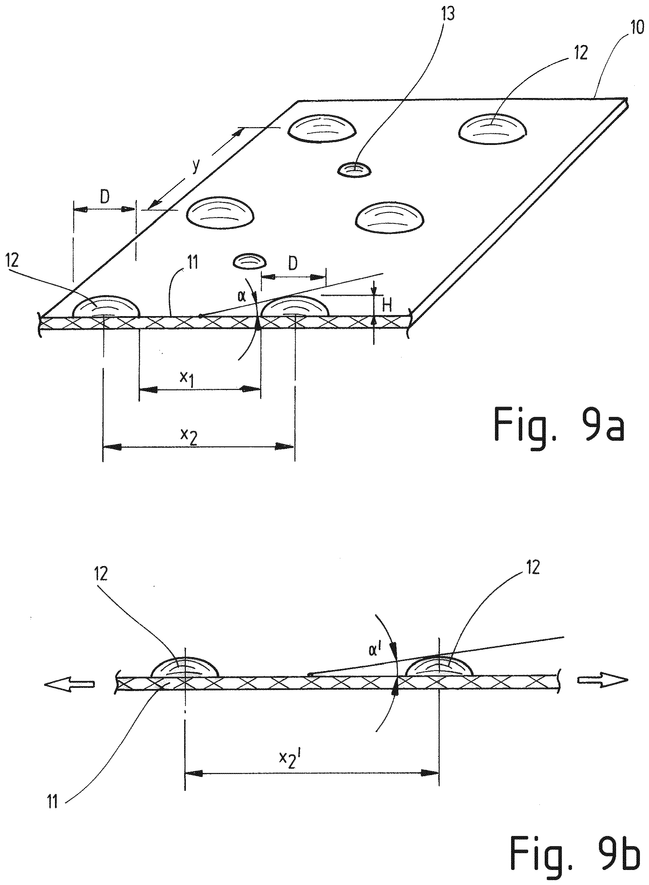

In Fig. 9a ist ein Ausschnitt eins erfindungsgemäß ausgerüsteten Bekleidungsstücks 10 dargestellt, und zwar ein textiler Abschnitt 11 im ungedehnten Zustand, der sowohl in der einen, mit x₁, x₂ bezeichneten Richtung, wie auch in der senkrecht dazu verlaufenden y-Koordinate mit mehreren Protektorelementen 12 versehen ist. Neben den größeren Protektorelementen 12, die im dargestellten Ausführungsbeispiel in einem regelmäßigen Raster angeordnet sind, sind im Zentrum zusätzlich kleinere Protektorelemente 13 angeordnet. Die größeren Protektorelemente 12 besitzen einen Durchmesser D von 3 bis 6 mm. Die kleineren Protektorelemente 13 besitzen einen Durchmesser d von 2 bis 4 mm. Im ungedehnten Zustand ist ein Rasterabstand X₂ von etwa dem doppelten des Durchmessers D vorgesehen. Zugleich besitzen die Protektorelemente 12 eine Höhe H, die dem 0,5 bis 0,1-fachen des Durchmessers D entsprechen. Auf diese Weise ergibt sich eine Tangente, die mittig zwischen gleichartigen Protektorelementen 12 ansetzt und die Protektorelemente 12 berührt. Dieser Winkel wird als Gleitwinkel α bezeichnet, der zumindest kleiner als 45° ist, vorzugsweise 30° und weniger beträgt.

Fig. 9b zeigt den Gewebeabschnitt 11 noch einmal im gedehnten Zustand. Der Rasterabstand x₂' der Protektorelemente 12 ist hier um wenigstens 20% vergrößert.. Durch die unveränderte Geometrie der Protektorelemente 12 selbst sinkt der Gleitwinkel α' aufgrund der Dehnung, so dass allein schon durch die Vorspannung beim Anziehen des Bekleidungsstücks der Winkel reduziert und damit das Abgleiten auf Rauhigkeitsspitzen und Fremdkörpern verbessert wird.

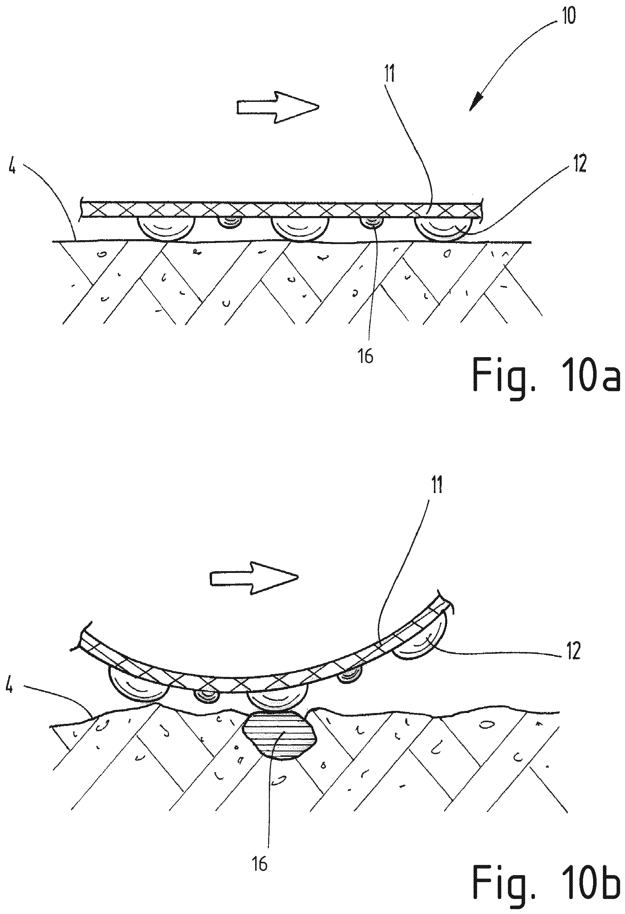

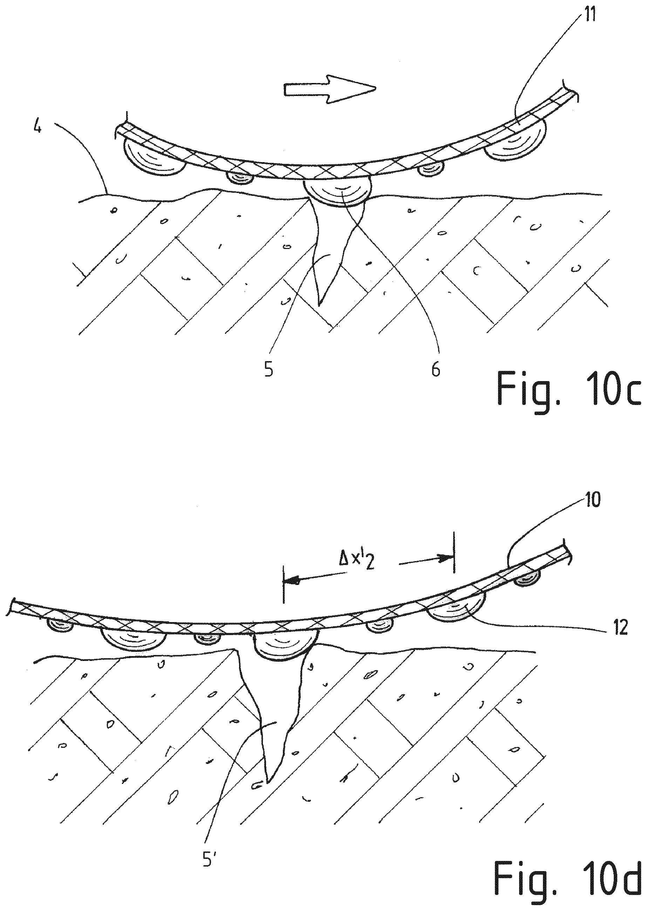

Die Fig. 10a bis 10c zeigen einen Gleitvorgang ähnlich der Darstellung des Standes der Technik in den Fig. 1a und 1b. Unten ist eine Fahrbahn 4 dargestellt, darüber das Bekleidungsstück 10 mit den Protektorelementen 12, 13 bei einer von links nach rechts erfolgenden Rutschbewegung. Dargestellt ist die bevorzugte Ausführungsform des Bekleidungsstücks 10 mit wenigstens zwei unterschiedlichen Größenklassen von Protektorelementen 12, 13.

Fig. 10a entspricht wieder einer idealisierten Annahme, bei der die gestürzte Person über eine in Größenrelation zu den Protektorelementen 12, 13 glatte Fahrbahnoberfläche rutscht. Hierbei kommt es lediglich zu einem Abrieb in der Kontaktfläche zwischen Fahrbahn 4 und den höheren Protektorelementen 12. Sollten einzelne Protektorelemente 12 trotz ihrer sehr großen Härte bei einem längeren Rutschweg verschlissen sein, wird ein zusätzlicher Schutz durch die kleineren Protektorelemente 13 erreicht.

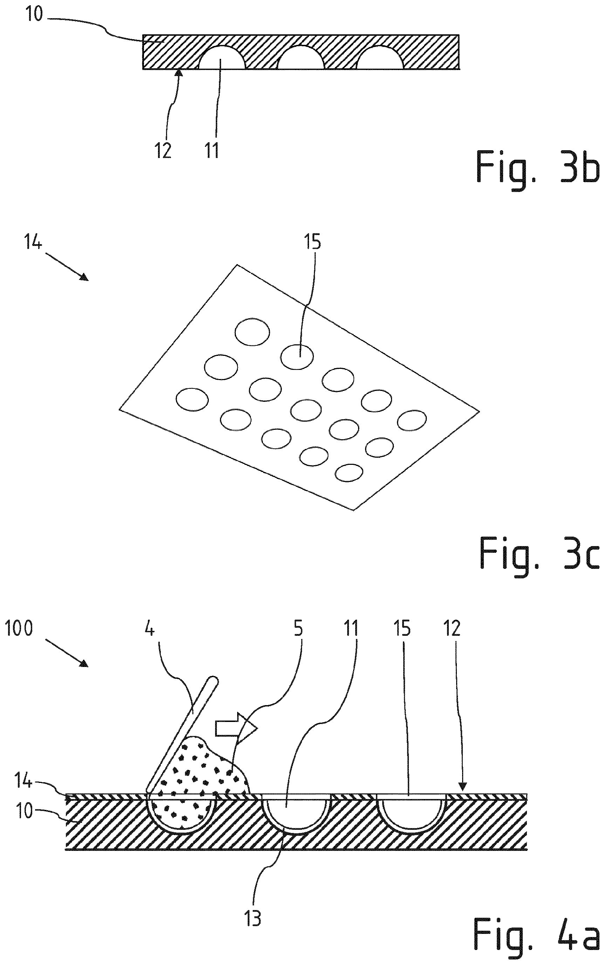

Fig. 10b zeigt eine der realen Situationen stärker angenäherte Darstellung. Aufgrund der Krümmung der Körperoberfläche sind einzelne Protektorelemente stärker exponiert, so dass auch die dazwischen freiliegenden textilen Bereiche näher an die Fahrbahnoberfläche herangedrückt werden, wozu bei der bevorzugten Ausführungsform wiederum eine weitere Reihe von Protektorelementen 13 mit kleinerer Größe dient. Aufgrund des geringen Gleitwinkels und der Kugelabschnittsform der Protektorelemente 12 gleitet in der Darstellung nach Fig. 3b das mittlere Element über einen kleinen Stein 6, und über Rauigkeiten der Fahrbahn hinweg, ohne dass die textile Basis mit der Fahrbahn in Berührung kommt.

In Fig. 10c ist eine Fahrbahn mit einem scharfkantigen Riss 5 dargestellt. Das mittlere Protektorelement 12 wird an der Kante des Risses zurückgehalten. Wie das Detail Fig. 3d zeigt, erfolgt dann aufgrund der vorhandenen Restelastizität in der textilen Basis 11 eine Überdehnung des Gewebes 11 im markierten Bereich, so dass sich der ursprüngliche Rasterabstand auf ein Maß x₂' vergrößert. Aufgrund seiner flachen und kuppelförmigen Ausbildung dringt das Protektorelement 12 jedoch nicht tief in den Riss 5 ein und wird schließlich durch die weiterrutschende Person und durch die von dem elastischen Gewebe 11 hervorgerufen Rückstellung zurück in die Ausgangslage geführt.

Zur Fertigung der Protektorelemente 101 wird eine textile Trägerschicht in Form eines Rundstrickschlauchs 1 verwendet. Dieser wird in an sich bekannter Weise hergestellt. Zur Bildung der in Figur 1 dargestellten Hose 120 beispielsweise wird die Weite des Rundstrickschlauchs 1 auf den Oberkörperumfang des Trägers abgestimmt. Durch späteres Ausschneiden des unteren Teils des Schlauchs können die Beine ausgebildet werden.

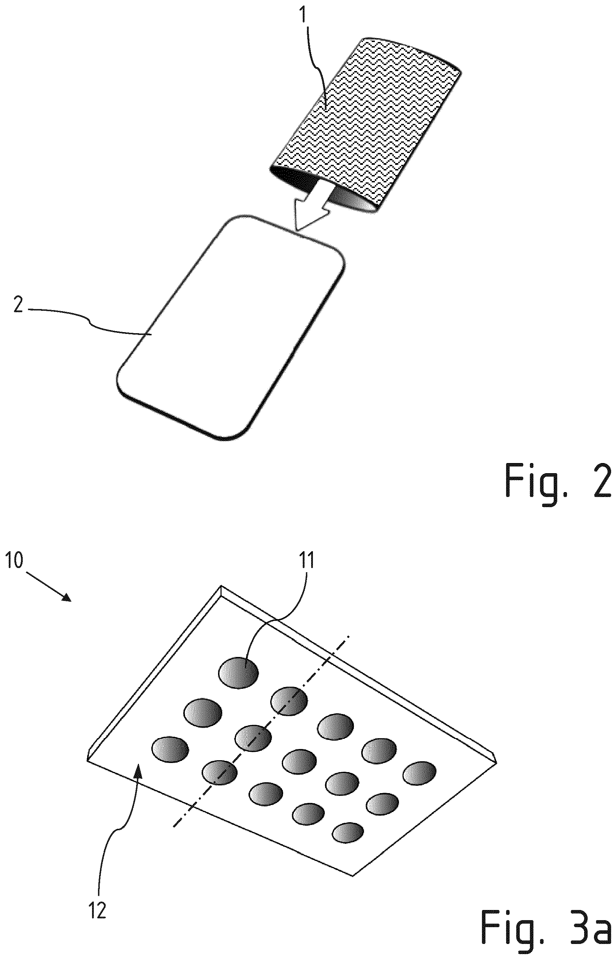

In den - wie in Figur 2 dargestellt - flach gelegten Rundstrickschlauch 1 wird eine Stützplatte 2 geschoben, um eine harte Unterlage zu schaffen und den Rundstrickschlauchs einfach fixieren zu können. Es braucht lediglich die gesamte Einheit aus Rundstrickschlauch 1 und Stützplatte 2 fixiert zu werden, ohne dass das Textil irgendwie in sonstiger Weise aufgespannt werden müsste. Die Stützplatte 2 sollte aus Metall oder einem anderen hitzebeständigen Werkstoff bestehen, um unter Wärmeeinwirkung stabil zu bleiben.

Zur Herstellung der vielen relativ kleinen Protektorelemente 101 an dem in Figur 1 gezeigten Bekleidungsstücke 110, 120 wird eine Formplatte 10 verwendet, die in Figur 3a schematisch dargestellt ist. Zur Verdeutlichung sind hier wie auch in den folgenden Figuren an einer Oberfläche 12 nur wenige Formkavitäten 11 in außerdem vergrößerter Form dargestellt. Tatsächlich beträgt der Durchmesser der Formkavitäten 12 etwa 2 bis 6 mm. Die Tiefe der Formkavitäten 12 entspricht etwa dem halben Durchmesser.

Auch ist die gleichmäßig rasterförmige Anordnung der Kavitäten nur als beispielhaft zu verstehen, denn es hat sich als vorteilhaft erwiesen eine ungeordnet, anisotrope Verteilung der Protektorelemente auf dem Bekleidungsstück vorzusehen, um längere Anrisslinien zu vermeiden.

Weiterhin können innerhalb einer Anordnung von Kavitäten mit größeren Basisdurchmessern auch kleinere Kavitäten vorgesehen sein. Die Zwischenfügung kleiner Protektorelemente bietet einen zusätzlichen Schutz gerade dann, wenn ein lokal stark überstrecktes Gewebe oder Gestrick zwischen den größeren Protektorelementen frei liegen sollte.

Wie die Schnittansicht der Formplatte 10 in Figur 3b zeigt, sind die Formkavitäten 11 nur zur Oberfläche 12 hin geöffnet. Die Formplatte 10 besteht vorzugsweise aus Aluminium, das unter Wärmeeinfluss ausreichend stabil bleibt und bei manueller Fertigung aufgrund des geringen Gewichts gut handhabbar ist.

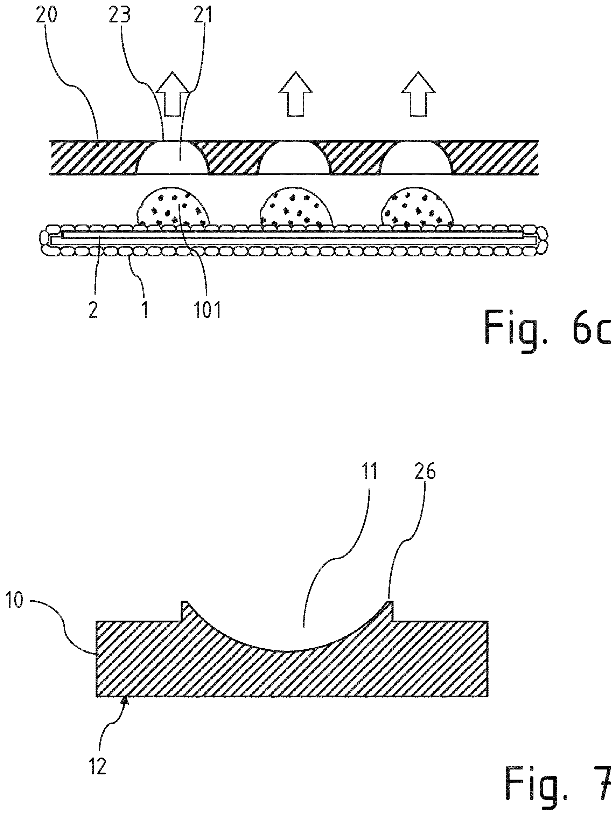

Die Oberfläche 12 der Formplatte 10 ist dabei, wie aus Fig. 7 hervorgeht, bis zur Randerhöhung 26 der Formkavitäten 11 hin abgesenkt gefräst. Die Tiefe der Absenkung entspricht dabei der Dicke einer in Fig. 3c näher beschriebenen Rakelhilfeplatte. Mit aufgesetzter Rakelhilfeplatte ist die Oberfläche 12 mit der Randerhöhung 26 eben abschließend.

Figur 3c zeigt eine Rakelhilfeplatte 14, die Öffnungen 15 besitzt. Die Größe und die Anordnung der Öffnungen 15 korrespondieren zu den Öffnungen der Formkavitäten 11 in der Formplatte 10.

Eine erste Ausführungsform eines erfindungsgemäßen Herstellungsverfahrens wird anhand der in den Figuren 4a bis 4f illustrierten Abfolge erläutert:
In Figur 4a ist die Formplatte 10 bereits vorbereitet, indem die Formkavitäten 11 mit einem Trennmittel 13 behandelt worden sind. Weiterhin ist die Rakelhilfeplatte 14 auf die Oberfläche 12 aufgelegt. In die linke Formkavität 11 ist mittels einer Rakel 4 bereits Beschichtungsmasse 5 eingestrichen worden.

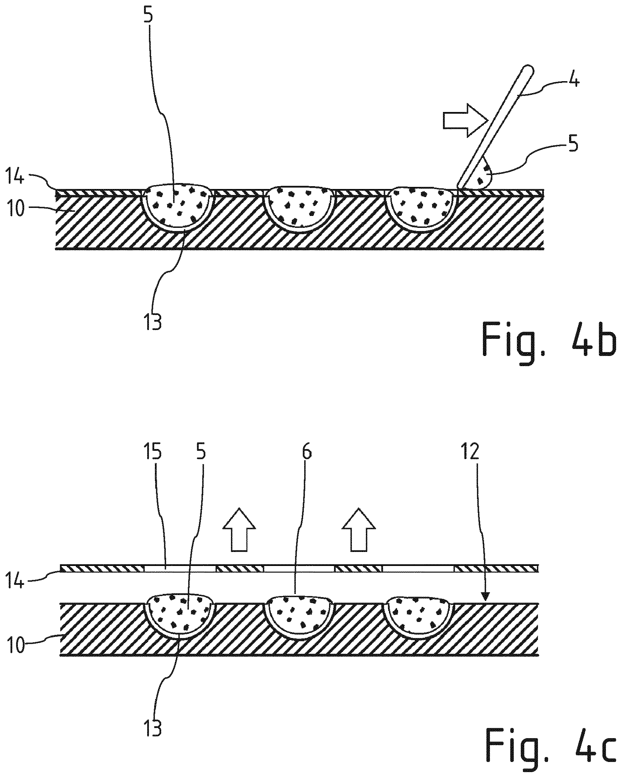

In Figur 4b sind alle Formkavitäten 11 mit Beschichtungsmasse 5 gefüllt. Überschüssige Beschichtungsmasse 5 wird über die Rakel 4 entfernt.

Anschließend wird, wie in Figur 4c gezeigt, die Rakelhilfeplatte 14 nach oben von der Formplatte 10 abgezogen.

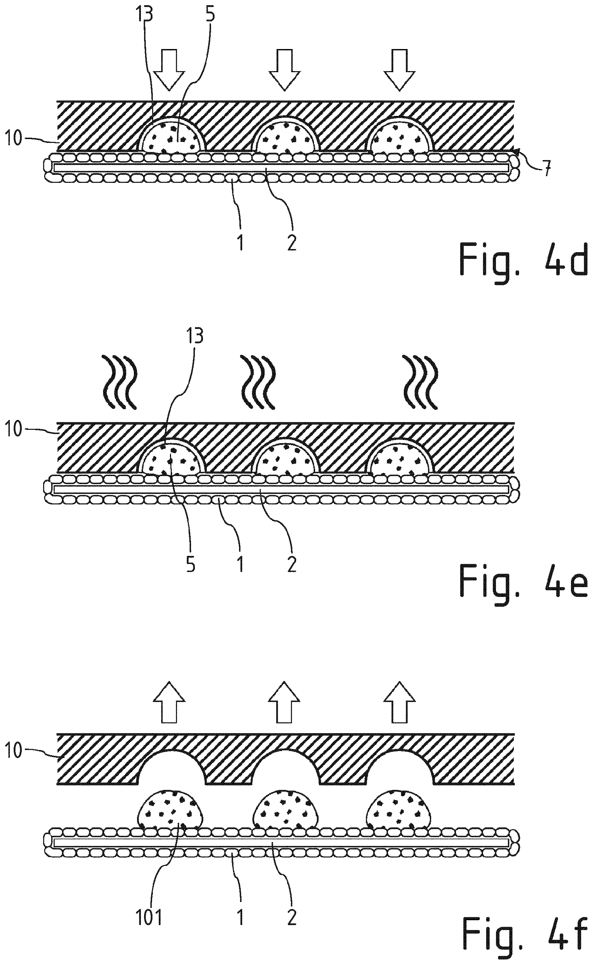

Die entsprechend vorbereitete Formplatte 10 wird nun, wie in Figur 4d gezeigt, umgedreht und mit den Öffnungen nach unten auf den Rundstrickschlauch 1 aufgelegt. Durch Aufdrücken der Formplatte 10 auf den Rundstrickschlauch 1 wird die Beschichtungsmasse 5 in das Gestrick hineingedrückt.

Figur 4e stellt die Aushärtung der Beschichtungsmasse 5 durch Wärmebehandlung dar. Die in das Gestrick hineingedrückte Beschichtungsmasse 5 geht dadurch eine unlösbare, feste Verbindung mit dem Gestrick ein.

Nach der Aushärtung braucht nur noch entsprechend Figur 4f die Formplatte 10 von dem Rundstrickschlauch 1 abgenommen zu werden. Die Beschichtungsmasse 5 verbleibt nun in Form fester Protektorelemente 1001 an der textilen Basisschicht. Es braucht dann lediglich noch die Stützplatte 2 herausgenommen zu werden, um die Fertigung abzuschließen. Der Rundstrickschlauch 1 wird anschließend in bekannter Weise zu einem Bekleidungsstück weiterverarbeitet.

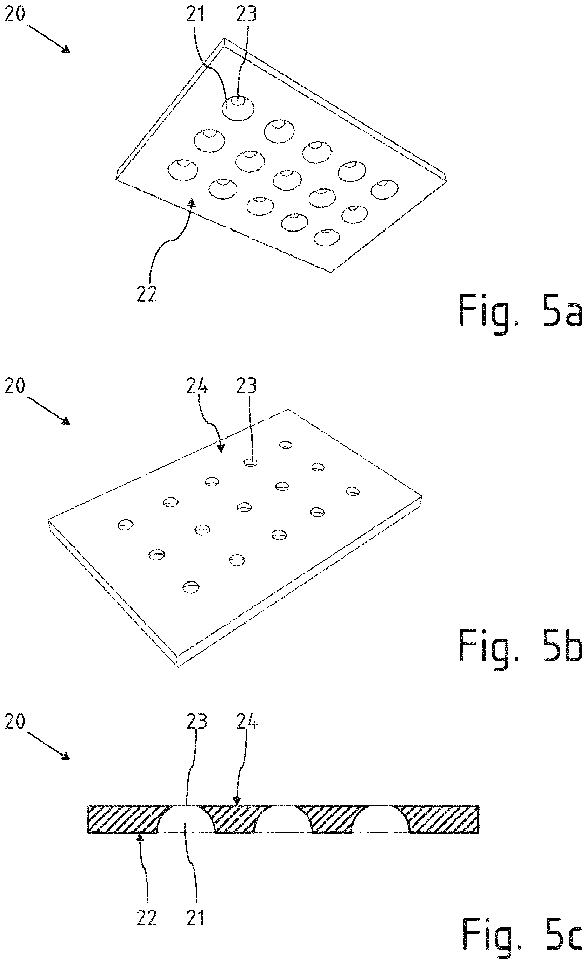

Figur 5a zeigt eine weitere Formplatte 20, die Formkavitäten 21 aufweist, welche konkav, insbesondere kugelabschnittsförmig, ausgebildet sind und welche sich mit ihrer breiten Basis zu einer ersten Oberfläche 22 hin öffnen. Im oberen Bereich ihrer Wölbungen besitzen die Formkavitäten 21 eine weitere, schmale Öffnung 23. Auch bei der gezeigten Ausführungsform der Formplatte 20 sind zur besseren Darstellung nur wenige, vergrößerte Formkavitäten dargestellt.

Figur 5b zeigt die gegenüberliegende Oberfläche 24 der Formplatte 20 mit den schmalen Öffnungen 23.

Die Schnittansicht in Figur 5c verdeutlicht die Lage der Formkavitäten 21. Durch die Öffnungen 23 entsteht eine leichte Abweichung von der durch die gestrichelten Linien dargestellten Idealform einer Halbkugel.

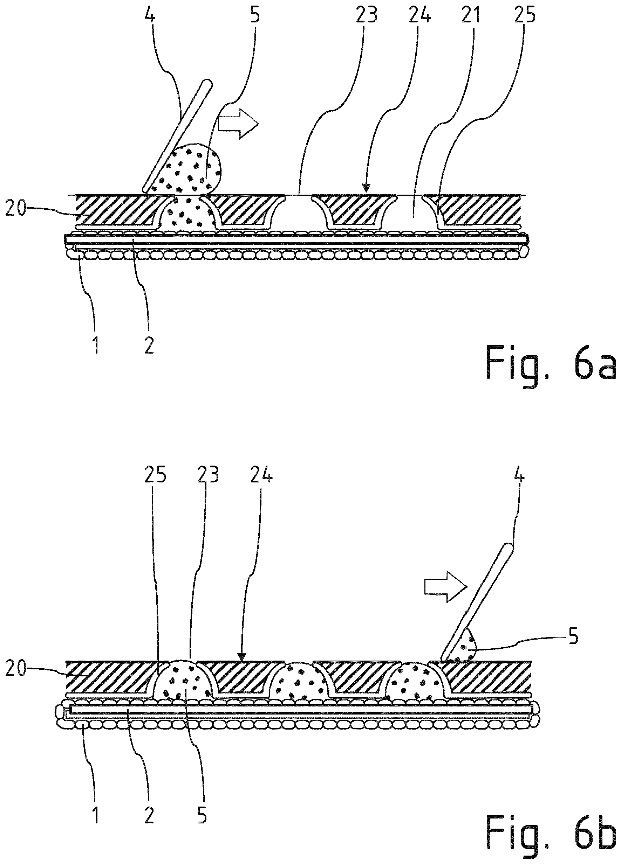

Eine zweite Ausführungsform eines erfindungsgemäßen Herstellungsverfahrens unter Verwendung der Formplatte 20 wird anhand der in den Figuren 6a bis 6c gezeigten Abfolge erläutert:
In Figur 6a ist die Formplatte 20 bereits auf den mit der Stützplatte 2 abgestützten Rundstrickschlauch 1 aufgelegt. Die Formkavitäten 21 sind zuvor mit einem Trennmittel 25 behandelt worden. Die Beschichtungsmasse 5 wird mittels einer Rakel 4 in die Formkavitäten 21 eingestrichen, und zwar von der Oberfläche 24 ausgehend durch die schmalen Öffnungen 23 in der jeweiligen Oberseite der Formkavitäten 21 hindurch.

Gemäß Figur 6b sind alle Formkavitäten 21 gefüllt und überschüssige Beschichtungsmasse 5 ist durch die Rakel 4 entfernt worden. Nachfolgend kann die Aushärtung der Beschichtungsmasse vorgenommen werden, indem die Einheit aus Rundstrickschlauch 1 und Formplatte 20 beispielsweise in einen Härteofen eingeführt wird.

Wie Figur 6c zeigt, wird die Formplatte 20 nach dem Aushärten abgezogen, so dass wiederum die ausgehärtete Beschichtungsmasse jeweils pro Formkavität als ein Protektorelement 101 am Rundstrickschlauch 1 verbleibt.

Die vorliegende Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen. Beispielsweise kann die Randerhöhung 26 unterschiedlich gestaltet sein.

## Patentansprüche

1. Textiles Bekleidungsstück (10, 110, 120) mit wenigstens einer mit Protektorelementen (12, 30) belegten Schürfschutzzone (111, 112, 113, 121, 122, 123), in welcher eine Vielzahl von Protektorelementen (12, 13) mit Abstand zueinander auf eine textile Basis (11, 21) aufgebracht sind, wobei die Protektorelemente (12, 13) aus einer Polymermatrix mit eingelagerten abriebfesten Partikeln bestehen,
**dadurch gekennzeichnet, dass**
wenigstens eine Schutzzone als Schürfschutzzone (111, 112, 113, 114, 211, 212, 213) ausgebildet ist, in welcher die textile Basis (11) aus einem Gestrick gebildet ist, das um wenigstens 20% dehnbar ist,
- wobei die Protektorelemente (12, 13) buckelförmig ausgebildet sind und mit einer breiten Basis an der textilen Basis (11) verankert sind und sich nach außen hin verjüngen,
- wobei die zwischen einer Kuppe und der Basis gemessene Höhe der Protektorelemente (12, 13) das 0,1fache bis 0,5fache ihres Flächendurchmessers an der Basis beträgt,
- der als ein Winkel zwischen der textilen Basis und einer Tangente, die aus der Mitte zwischen benachbarten Protektorelementen an der textilen Basis ausgeht und jeweils tangential an einem Protektorelement anliegt definierte Gleitwinkel kleiner als 45°, insbesondere kleiner als 30°, ist.
- unterschiedliche Größen von Protektorelementen (12, 13) angebracht werden, wobei zwischen benachbarten größeren Protektorelementen (12), wenigstens je ein kleines Protektorelement (13) angeordnet ist.

2. Bekleidungsstück nach Anspruch 1, **dadurch gekennzeichnet, dass** die Protektorelemente (12, 13) kugelabschnittsförmig oder linsenförmig sind.

3. Bekleidungsstück nach einem der Ansprüche 1 oder 2, **dadurch gekennzeichnet, dass** die Protektorelemente aus Borcarbid und einem härtbaren polymeren Zusatzstoff bestehen.

4. Bekleidungsstück nach einem der Ansprüche 1 bis 3, **dadurch gekennzeichnet, dass** der Abstand der Protektorelemente (12, 13) untereinander im vorgedehnten Tragezustand der textilen Basis (11) wenigstens das 1,0fache des mittleren Flächendurchmessers an der Basis (11) beträgt und im gedehnten Zustand maximal das 3,0fache des mittleren Flächendurchmessers an der Basis (11) beträgt.

5. Bekleidungsstück nach einem der Ansprüche 1 bis 4, **dadurch gekennzeichnet, dass** der Durchmesser der Protektorelemente (12, 13) an der Basis (11) 2 mm bis 6 mm beträgt.

6. Bekleidungsstück nach einem der Ansprüche 1 bis 5, **dadurch gekennzeichnet, dass** der Durchmesser der größeren Protektorelemente (12) an der Basis (11) 4 mm bis 6 mm beträgt und der Durchmesser der kleineren Protektorelemente (13) an der Basis (11) 2 mm bis 4 mm beträgt.

7. Verfahren zum Herstellen eines textilen Bekleidungsstücks (100) mit wenigstens einer mit Protektorelementen (101) belegten Schürfschutzzone (110) nach einem der vorhergehenden Ansprüche, mit wenigstens folgenden Schritten:
1) Bereitstellen einer textilen Trägerschicht (1);
2) Bereitstellen eines pastösen, aushärtbaren Beschichtungsmaterials (5);
3) Auftragen einer Vielzahl an Portionen des Beschichtungsmaterials (5) auf eine Oberfläche der Trägerschicht zur Bildung der Protektorelemente (101), wobei die Portionen des Beschichtungsmaterials (5) derart auf der Oberfläche angeordnet werden, dass die Portionen nicht überlappen, und dass nur ein Teil der Oberfläche der Trägerschicht durch das Beschichtungsmaterial (5) bedeckt ist;
4) Aushärten des Beschichtungsmaterials (5) zur Ausbildung einer Vielzahl von harten Protektorelementen (101) auf der Trägerschicht;
**dadurch gekennzeichnet,**
a) **dass** die textile Trägerschicht dehnbar ist und in Form eines beidseitigen offenen textilen Schlauches (1) bereitgestellt wird und dass vor dem Auftragen des Beschichtungsmaterials (5) ein Stützelement (2) in den Schlauch (1) eingeführt wird, durch welches der Schlauch (1) vorgedehnt und in den vorgesehenen Schürfschutzzonen faltenfrei aufgespannt wird;
b) **dass** wenigstens ein Formelement (10, 20) verwendet wird, das eine Vielzahl von konkaven Formkavitäten (11, 21) zur Ausbildung der Protektorelemente (101) enthält, die mit der pastösen Beschichtungsmasse (5) gefüllt werden, und dass das Formelement (10, 20) mit der mit den Öffnungen der Formkavitäten (11, 21) versehenen Oberfläche (12, 22) auf den mit der Stützplatte (2) gestützten Schlauch (1) aufgelegt wird;
c) **dass** die Beschichtungsmasse (5) ausgehärtet wird und
d) **dass** das Formelement (10, 20) von dem textilen Schlauch (1) abgenommen wird.

8. Verfahren nach Anspruch 7, **gekennzeichnet durch** folgende weitere Schritte im Schritt b):
b1) Verwendung einer ebenen Formplatte (10) als Formelement und Auflegen einer dünnen Rakelhilfeplatte (14) auf die Formplatte (10), wobei die Dicke der Rakelhilfeplatte (14) weniger als ein Fünftel der Tiefe der Formkavitäten (11) beträgt und wobei die Rakelhilfeplatte (14) mit Ausnehmungen (15) versehen ist, deren Lochbild mit den Öffnungsquerschnitten der Formkavitäten (11) an der Oberfläche (12) der Formplatte (10) übereinstimmt;
b2) Einbringen des pastösen Beschichtungsmaterials (5) **durch** die Öffnungen der Rakelhilfeplatte (14) hindurch in die Formkavitäten (11) der Formplatte (10) hinein;
b3) Abrakeln der Oberfläche der Rakelhilfeplatte (14); und
b4) Abnehmen der Rakelhilfeplatte (14) von der Formplatte (10).
b5) Auflegen der Formplatte (10) mit ihrer mit den Öffnungen der Formkavitäten (11) versehenen Oberfläche (12) auf den Schlauch (1).

9. Verfahren nach Anspruch 8, **dadurch gekennzeichnet, dass** zugleich zwei mit einer Rakelhilfeplatte (14) belegte und in den Formkavitäten (11) mit Beschichtungsmasse (5) gefüllte Formplatten (10) verwendet werden, die an gegenüberliegenden Seiten des mit der Stützplatte (2) gestützten Schlauchs (1) aufgelegt werden.

10. Verfahren nach Anspruch 7, **gekennzeichnet durch** folgende weitere Schritte im Schritt b):
b1) Bereitstellen wenigstens eines Formelements (20), das eine Vielzahl von konkaven Formkavitäten (21) zur Ausbildung der Protektorelemente (101) enthält, wobei die Formkavitäten (21) jeweils eine breite Basis an der der textilen Trägerschicht (1) zuzuwendenden Oberfläche (22) besitzen und eine verjüngte Öffnung (23) an der gegenüberliegenden Oberfläche (24) besitzen;
b2) Auflegen des Formelements (20) mit der mit den breiten Öffnungen der Formkavitäten (21) versehenen Oberfläche (22) auf den mit dem Stützelement gestützten Rundstrickschlauch (1);
b3) Einbringen des pastösen Beschichtungsmaterials (5) **durch** die schmalen Öffnungen (23) des Formelements (20) hindurch in die Formkavitäten (21);
b4) Abrakeln der mit den schmalen Öffnungen (23) der Formkavitäten (21) versehenen Oberfläche (24).

11. Verfahren nach einem der vorhergehenden Ansprüche 7 bis 10, **dadurch gekennzeichnet, dass** die textile Trägerschicht durch ein dreidimensionales Gestrick gebildet ist und der Schlauch (1) ein Rundstrickschlauch ist.

12. Verfahren nach einem der vorhergehenden Ansprüche 7 bis 11, **dadurch gekennzeichnet, dass** zumindest die Formkavitäten (11, 21) in dem Formelement (10, 20) vor dem Auftragen der pastösen Beschichtungsmasse (5) mit einem Trennmittel (13) versehen werden.

13. Verfahren nach einem der vorhergehenden Ansprüche 7 bis 12, **dadurch gekennzeichnet, dass** der Schlauch (1) eine Dehnbarkeit von wenigstens 20% bis 40% besitzt.

## Claims

1. Textile garment (10, 110, 120) having at least one scrape protection zone (111, 112, 113, 121, 122, 123) occupied by protector elements (12, 30), in which a plurality of protector elements (12, 13) are attached to a textile base (11, 21) at a distance from one another, wherein the protector elements (12, 13) consist of a polymer matrix with embedded abrasion-resistant particles,
**characterized in that** at least one protection zone is designed as a scrape protection zone (111, 112, 113, 114, 211, 212, 213) in which the textile base (11) is made from a knitted fabric that is stretchable by at least 20%, - wherein the protector elements (12, 13) are dome-shaped and are anchored with a broad base to the textile base (11) and become narrower outwardly, - wherein the height of the protector elements (12, 13) measured between a dome and the base is 0.1 to 0.5 times as large as the face diameter thereof at the base, - the angle of repose, defined as an angle between the textile base and a tangent that extends from the middle between adjacent protector elements on the textile base and tangentially abuts each protector element is smaller than 45°, particularly smaller than 30°, - protector elements (12, 13) of different sizes are attached, wherein at least one small protector element (13) is arranged in each case between adjacent larger protector elements (12).

2. Garment according to Claim 1, **characterized in that** the protector elements (12, 13) are in the shape of spherical segments or lenticular.

3. Garment according to either of Claims 1 or 2, **characterized in that** the protector elements of are made from boron carbide and a curable polymer additive.

4. Garment according to any one of Claims 1 to 3, **characterized in that** the distance of the protector elements (12, 13) from each other in the in the prestretched wearing state of the textile base (11) is at least 1.0 times as great as the average face diameter at the base (11), and in the stretched state not more than 3.0 times greater than the average face diameter at the base (11).

5. Garment according to any one of Claims 1 to 4, **characterized in that** the diameter of the protector elements (12, 13) at the base (11) is 2 mm to 6 mm.

6. Garment according to any one of Claims 1 to 6, **characterized in that** the diameter of the larger protector elements (12) at the base (11) is 4 mm to 6 mm and the diameter of the smaller protector elements (13) at the base (11) is 2 mm to 4 mm.

7. Method for manufacturing a textile garment (100) having at least one scrape protection zone (110) occupied by protector elements (101) according to any one of the preceding claims, comprising at least the following steps:
1) providing a textile backing layer (1);
2) providing a paste-like curable coating material (5) ;
3) applying a plurality of portions of the coating material (5) to a surface of the backing layer to form the protector elements (101), wherein the portions of the coating material (5) are arranged on the surface in such manner that the portions do not overlap, and that only a part of the surface of the backing layer is covered by the coating material (5);
4) curing the coating material (5) to form a plurality of hard protector elements (101) on the backing layer;
**characterized in that**
a) the textile backing layer is stretchable and is provided in the form of a textile tube (1) open on both sides, and that a supporting element (2) is introduced into the tube (1) before the application of coating material (5), by which supporting element the tube (1) is pre- stretched and extended without creases over the intended scrape protection zones;
b) at least one mould element (10, 20) is used, which contains a multiplicity of concave mould cavities (11, 21) for forming the protector elements (101), which are filled with paste-like coating mass (5), and that the surface (12, 22) of the moulded element (10, 20) that is furnished with the openings of the mould cavities (11, 21) is placed over the tube (1) which is supported on the supporting element (2);
c) the coating mass (5) is cured and
d) the mould element (10, 20) is removed from the textile tube (1).

8. Method according to Claim 7, **characterized by** the following further steps in step b):
b1) use of a flat mould plate (10) as a mould element and applying a thin spreading assistance panel (14) on the mould plate 10), wherein the thickness of the spreading assistance panel (14) is less than a fifth of the depth of the mould cavities (11), and wherein the spreading assistance panel (14) is furnished with recesses (15), the hole pattern of which corresponds to the opening cross sections of the mould cavities (11) on the surface (12) of the mould plate (10);
b2) introducing the paste-like coating material (5) into the interior of the mould cavities (11) of the mould plate (10) through the openings in the spreading assistance panel (14);
b3) wiping of the surface of the spreading assistance panel (14); and
b4) removing the spreading assistance panel (14) from the mould plate (10)
b5) placing the surface (12) of the mould plate (10) which is furnished with the openings of the mould cavities (11) over the tube (1).

9. Method according to Claim 8, **characterized in that** two mould plates (10) covered with a spread assistance panel (14) and having mould cavities (11) filled with coating mass (5) are used at the same time and placed on opposite side of the tube (1) which is supported on the supporting element (2).

10. Method according to Claim 7, **characterized by** the following further steps in step b):
b1) provision of at least one mould element (20) containing a multiplicity of concave mould cavities (21) for forming the protector elements (101), wherein each of the mould cavities (21) has a broad base on the surface (22) facing the textile backing layer (1) and an aperture (23) which becomes narrower on the opposite surface (24);
b2) placing the surface (22) of the mould element (20) which is furnished with the wide openings of the mould cavities (21) over the round knitted tube (1) which is supported on the supporting element;
b3) introducing the paste-like coating material (5) into the mould cavities (21) through the narrow openings (23) in the mould element (20);
b4) scraping smooth the surface (24) furnished with the narrow openings (23) of the mould cavities (21).

11. Method according to any one of the preceding Claims 7 to 10, **characterized in that** the textile backing layer is formed by a three-dimensional knitted fabric, and the tube (1) is a circular knitted tube.

12. Method according to any one of the preceding Claims 7 to 11, **characterized in that** at least the mould cavities (11, 21) in the mould element (10, 20) are furnished with a releasing agent (13) before the pasty coating mass (5) is applied.

13. Method according to any one of the preceding Claims 7 to 12, **characterized in that** the tube (1) has an stretching capability of at least 20% to 40%.

## Revendications

1. Pièce de vêtement textile (10, 110, 120) pourvue d'au moins une zone de protection anti-écorchures (111, 112, 113, 121, 122, 123), garnie d'éléments protecteurs (12, 30) dans laquelle une pluralité d'éléments protecteurs (12, 13) sont appliqués avec un écart mutuel sur une base textile (11, 21), les éléments protecteurs (12, 13) étant constitués d'une matrice polymère avec des particules anti-abrasion incorporées, **caractérisée en ce qu'**au moins une zone de protection est conçue en tant que zone de protection anti-écorchures (111, 112, 113, 114, 211, 212, 213) dans laquelle la base textile (11) est formée en un tissu tricoté qui est extensible d'au moins 20%,
- les éléments protecteurs (12, 13) étant conçus en forme de bosses et étant ancrés par une large base sur la base textile (11) et se rétrécissant vers l'extérieur,
- la hauteur des éléments protecteurs (12, 13), mesurée entre un sommet et la base s'élevant à de 0,1 fois à 0,5 fois leur diamètre superficiel à la base,
- l'angle de glissement défini en tant qu'un angle entre la base textile et une tangente, qui part du milieu entre des éléments protecteurs voisins sur la base textile et qui jouxte de manière tangentielle chaque fois un élément protecteur étant inférieur à 45°, notamment inférieur à 30°,
- différentes tailles d'éléments protecteurs (12, 13) étant appliquées, entre des éléments protecteurs (12) plus grands voisins étant placé au moins chaque fois un petit élément protecteur (13).

2. Pièce de vêtement selon la revendication 1, **caractérisée en ce que** les éléments protecteurs (12, 13) ont une forme de section sphérique ou une forme lenticulaire.

3. Pièce de vêtement selon l'une quelconque des revendications 1 ou 2, **caractérisée en ce que** les éléments protecteurs sont constitués en carbure de bore et en un additif polymère durcissable.

4. Pièce de vêtement selon l'une quelconque des revendications 1 à 3, **caractérisée en ce que** l'écart réciproque entre les éléments protecteurs (12, 13) dans l'état porté préétiré de la base textile (11) s'élève à au moins 1,0 fois le diamètre superficiel moyen à la base (11) et dans l'état étiré s'élève au maximum à 3,0 fois le diamètre superficiel moyen à la base (11).

5. Pièce de vêtement selon l'une quelconque des revendications 1 à 4, **caractérisée en ce que** le diamètre des éléments protecteurs (12, 13) à la base (11) s'élève à de 2 mm à 6 mm.

6. Pièce de vêtement selon l'une quelconque des revendications 1 à 5, **caractérisée en ce que** le diamètre des plus grands éléments protecteurs (12) à la base (11) s'élève à de 4 mm à 6 mm et le diamètre des plus petits éléments protecteurs (13) à la base (11) s'élève à de 2 mm à 4 mm.

7. Procédé, destiné à fabriquer une pièce de vêtement textile (100) pourvue d'au moins une zone de protection anti-écorchures (110), garnie d'éléments protecteurs (101) selon l'une quelconque des revendications précédentes, comportant au moins les étapes suivantes, consistant à :
1) mettre à disposition une couche porteuse textile (1) ;
2) mettre à disposition une matière de revêtement (5) pâteuse durcissable ;
3) appliquer une pluralité de portions de la matière de revêtement (5) sur une surface de la couche porteuse, pour créer les éléments protecteurs (101), les portions de la matière de revêtement (5) étant placées sur la surface de telle sorte que les portions ne se chevauchent pas et que seule une partie de la surface de la couche porteuse soit recouverte par la matière de revêtement (5) ;
4) faire durcir la matière de revêtement (5) pour créer une pluralité d'éléments protecteurs (101) durs sur la couche porteuse ;
**caractérisé**
a) **en ce que** la couche porteuse textile est étirable et est mise à disposition sous la forme d'un boudin textile (1) ouvert de part et d'autre et en ce qu'avant l'application de la matière de revêtement (5), on introduit dans le boudin (1) un élément d'appui (2) par lequel le boudin (1) est préétiré et déployé sans plis dans les zones de protection anti-écorchures prévues ;
b) **en ce qu'**on utilise au moins un élément de moulage (10, 20) qui contient une pluralité de cavités de moule (11, 21) concaves, destinées à créer les éléments protecteurs (101) que l'on remplit de la masse de revêtement (5) pâteuse, et en ce qu'on pose l'élément de moulage (10, 20) par la surface (12, 22) munie des orifices des cavités de moule (11, 21) sur le boudin (1) supporté par la plaque d'appui (2) ;
c) **en ce qu'**on fait durcir la masse de revêtement (5) et
d) **en ce qu'**on retire l'élément de moulage (10, 20) du boudin (1) textile.

8. Procédé selon la revendication 7, **caractérisé par** les étapes supplémentaires suivantes dans l'étape b), consistant à :
b1) utiliser une plaque de moulage (10) plane en tant qu'élément de moulage et poser une mince plaque d'aide au raclage (14) sur la plaque de moulage (10), l'épaisseur de la plaque d'aide au raclage (14) s'élevant à moins d'un cinquième de la profondeur des cavités de moule (11) et la plaque d'aide au raclage (14) étant munie d'évidements (15) dont le gabarit de perçage coïncide avec les sections transversales des orifices des cavités de moule (11) sur la surface (12) de la plaque de moulage (10) ;
b2) introduire la matière de revêtement (5) pâteuse à travers les orifices de la plaque d'aide au raclage (14) à l'intérieur des cavités de moule (11) de la plaque de moulage (10) ;
b3) racler la surface de la plaque d'aide au raclage (14) ; et
b4) retirer la plaque d'aide au raclage (14) de la plaque de moulage (10),
b5) poser la plaque de moulage (10) par sa surface (12) munie des orifices des cavités de moule (11) sur le boudin (1).

9. Procédé selon la revendication 8, **caractérisé en ce qu'**on utilise simultanément deux plaques de moulage (10) garnies d'une plaque d'aide au raclage (14) et remplies de masse de revêtement (5) dans les cavités de moule (11) que l'on pose sur des côtés en vis-à-vis du boudin (1) supporté par la plaque d'appui (2).

10. Procédé selon la revendication 7, **caractérisé par** les étapes supplémentaires suivantes dans l'étape b), consistant à :
b1) mettre à disposition au moins un élément de moulage (20), qui contient une pluralité de cavités de moule (21) concaves pour créer les éléments protecteurs (101), les cavités de moule (21) comportant chacune une base large sur la surface (22) qui doit être dirigée vers la couche porteuse textile (1) et un orifice (23) rétréci sur la surface (24) en vis-à-vis ;
b2) poser l'élément de moulage (20) par la surface (22) munie des orifices larges des cavités de moule (21) sur le boudin (1) en tricot circulaire supporté par l'élément d'appui ;
b3) introduire la matière de revêtement (5) pâteuse à travers les orifices (23) étroits de l'élément de moulage (20) dans les cavités de moule (21) ;
b4) racler la surface (24) munie des orifices (23) étroits des cavités de moule (21).

11. Procédé selon l'une quelconque des revendications précédentes 7 à 10, **caractérisé en ce que** la couche porteuse textile est formée par un tissu tricoté tridimensionnel et le boudin (1) est un boudin en tricot circulaire.

12. Procédé selon l'une quelconque des revendications précédentes 7 à 11, **caractérisé en ce qu'**avant l'enlèvement de la masse de revêtement (5) pâteuse, on munit au moins les cavités de moule (11, 21) dans l'élément de moulage (10, 20) avec un agent de démoulage (13).

13. Procédé selon l'une quelconque des revendications précédentes 7 à 12, **caractérisé en ce que** le boudin (1) fait preuve d'une ductilité d'au moins 20% à 40%.
